Europäisches Patentamt

European Patent Office

Office européen des brevets

(11) Publication number: **0 194 407**
**A2**

## EUROPEAN PATENT APPLICATION

(21) Application number: **86100180.8**

(22) Date of filing: **08.01.86**

(51) Int. Cl.⁴: **G 01 F 11/26**

(30) Priority: **09.01.85 JP 1063/85 U**

(43) Date of publication of application:
**17.09.86 Bulletin 86/38**

(84) Designated Contracting States:
**DE GB**

(71) Applicant: **Toppan Printing Co., Ltd.**
**5-1, 1-chome, Taito**
**Taito-ku Tokyo(JP)**

(72) Inventor: **Maruyama, Takashi**
**c/o Toppan Printing Co. Ltd. 1-5-1, Taito**
**Taito-ku Tokyo(JP)**

(72) Inventor: **Fujima, Masatoshi**
**c/o Toppan Printing Co. Ltd. 1-5-1, Taito**
**Taito-ku Tokyo(JP)**

(74) Representative: **Grams, Klaus Dieter, Dipl.-Ing. et al,**
**Patentanwaltsbüro Tiedtke-Bühling-Kinne-**
**Grupe-Pellmann-Grams-Struif Bavariaring 4**
**D-8000 München 2(DE)**

(54) Measuring cap.

(57) A measuring cap to be mounted on an opening of a container, the cap comprising a cup-like body having an inlet on the side wall thereof, and a partition consisting of a top wall, a vertical plate and an inclined plate, said partition being fitted to the inside of said body to thereby define the interior of said body into a provisional measuring section, a main measuring section, and an outlet passage, the provisional section being communicated with said inlet.

FIG. 1

1.  TITLE OF THE INVENTION

MEASURING CAP

2.  BACKGROUND OF THE INVENTION

(1)  Field of the Invention

The present invention relates to a cap of a container, and more particularly, to a measuring cap which is designed so that the cap is attached to a container for contents in the form of powder or granule such as a detergent, a washing assistant, a fertilizer, a medicine, and medical supplies to simply take out the content only in the amount of use from the container thereby preventing an excessive use. The cap may be handled by one hand easily.

(2)  Description of the Prior Art

In the method for the quantitative discharge of the powdery or ganular content (hereinafter merely referred to as "content"), it is normally that the content in the container is successively subdivided. According to this method, small chambers separated for the subdivision have to be provided in plural number within the measuring cap, and in addition, a plurality of passages are required.

Therefore, the measuring cap itself has a very large size, and at present, the ratio of a volume for a single discharge portion to a volume occupied by the measuring cap is less than 10%. In the measuring cap attached to the opening of the container, a head space with respect to the content within the container greatly increases, and the container becomes increased in size for the quantity of the content, making it difficult to put it to practical use in the present state.

Furthermore, alternatively, a cover may be provided on an inlet and outlet of the passage or the small chamber so that the cover may be opened and closed to increase the quantity of discharge. In this case, however, a construction of the cap become complicated and a content is apt to be blocked so as not to flow smoothly as well as a cost may increase.

Accordingly, it would be the end of employing a method wherein the content is once introduced into a cap used for the container to provide for a standard and a measuring cup is separately prepared.

### 3. SUMMARY OF THE INVENTION

It is therefore an object of the present invention to provide a measuring cap in which the content is introduced directly from the side of a body of the measuring cap without using a passage,, which deteriorates the discharge efficiency, within a partitioned spare chamber to greatly enhance the efficiency, and which is low in manufacturing cost, increase the discharge stability, and can be handled simply, and has great practicality.

## 4.   BRIEF DESCRIPTION OF THE DRAWINGS

The drawings show embodiments of the present invention.

FIG. 1 is a sectional view showing the state in which a measuring cap according to the present inention is attached to an opening;

FIG. 2 is a plan view thereof;

FIG. 3 is a sectional view taken on line A-A' of FIG. 1;

FIG. 4 is a sectional view showing the state in which the cap is inclined;

FIG. 5 is a sectional view showing the state in which a further form of a measuring cap is attached to an opening;

FIG. 6 is a plan view thereof;

FIG. 7 is a sectional view taken on line A-A' of FIG. 5; and

FIG. 8 is a sectional view showing the state in which the cap of FIG. 5 is inclined.

## 5.   DETAILED DESCRIPTION OF THE PREFERRED EMBODIMENTS
### EMBODIMENT 1

A measuring cap according to this embodiment comprises a body 1 and a partitioning portion 2.

The body 1, which is formed from a cup-shaped integral molded article, comprises a circumferential wall 3, a bottom wall 4, and an inlet a provided between the circumferential wall 3 and the bottom wall 4.

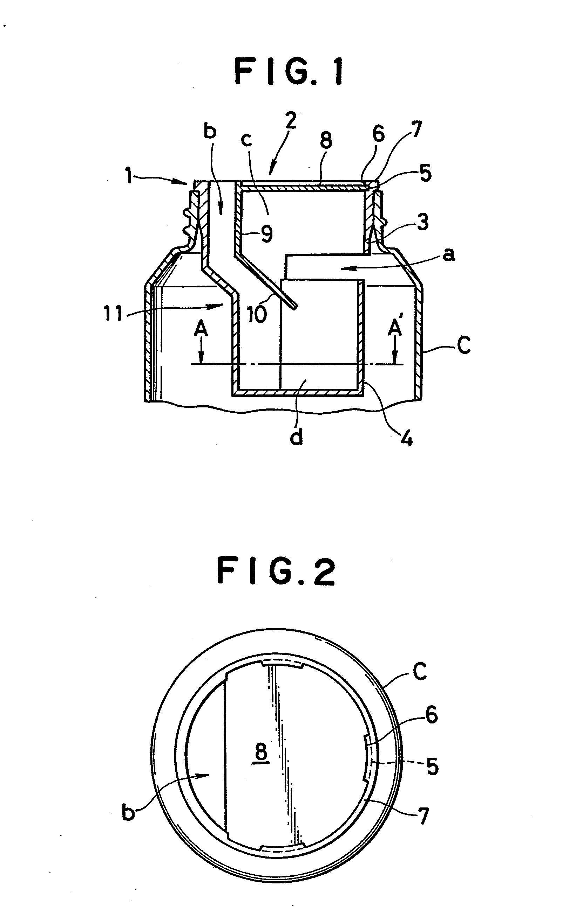

The bottom wall 4, as shown in Fig. 1, is in the form of a depression portion 11 in which the opposite side of the inlet a is inwardly positioned. Notches 5 and projections 6 to receive the partitioning portion 2 are provided internally on the upper end of the circumferential wall 3, and a flange 7 is provided externally on the upper end of the circumferential wall 3 to prevent it from the falling into the container. The inside diameter of the circumferential wall 3 has the outside diameter of the bottom wall 4 so that a half portion on the side of the inlet a of the bottom wall 4 may be molded integrally with the other half and the circumferential wall 3. It is devised so that an injection molding mold may take the simplest mold construction without use of a slide core.

The partitioning portion 2 is in the form of an integrated molded article which comprises a top wall 8, a vertical plate 9 and an inclined plate 10. The top wall 8 is fitted by the notches 5 and projections 6 internally of the upper end of the circumferential wall 3 of the body 1.  A provisional chamber $\underline{C}$ surrounded by the vertical plate 9, the inclined plate 10, the top wall 8 and the circumferential wall 3 of the body 1 is formed by the partitioning portion 2 within the body 1.  A main measuring chamber $\underline{d}$ is a portion surrounded by the bottom wall 4 below the inclined plate 10.

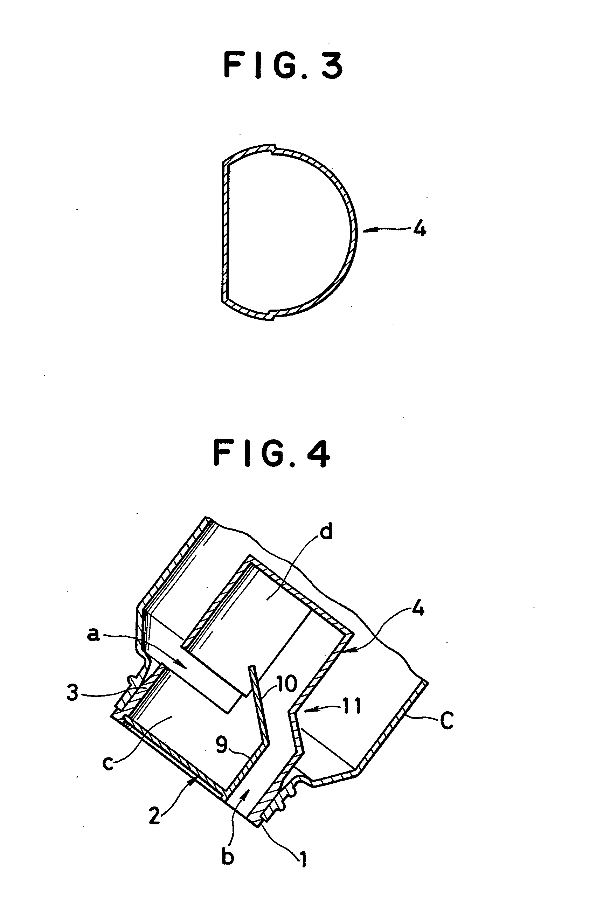

The operation of the measuring cap according to the present invention is very simple.  The container C is inclined to the extent that it is in the inverted attitude and then restored again to its original state. Then, the cap C is further inclined to the extent that it is in the inverted attitude, and a predetermined quantity of the current may be discharged to ready for next discharge.  When the container C is inclined as shown in FIG. 4, the content separated within the main measuring chamber $\underline{d}$ may be discharged passing through the outlet $\underline{b}$.  At the same time, the content within the container C enters the provisional chamber $\underline{c}$ from the inlet $\underline{a}$.

The inlet $\underline{a}$ is provided in the side of the body 1, which forms one of the important characteristics of the present invention.  In the conventional measuring cap, the inlet is normally provided in the lower surface of the body (on the opposite side of the outlet).  The reason does not result from the flowing direction of the content within the container but mainly results from the shape of the neck of the container. In the measuring cap of the system as in the present invention, the provisional section has to be positioned above the main measuring section. Accordingly, in the case where the inlet is located below the body of the measuring cap as in prior art, the inlet has to extend through the main measuring chamber to the upper provisional section, and the volume of the main measuring chamber and the volume for a sectional area portion of the inlet of the provisional chamber are a mere passage, which will be a volume that may not be used as a small chamber. Therefore, for securing the same amount of discharge, the conventional system is deteriorated in efficiency since the measuring cap has a greater volume than that of the system according to the present invention.

In view of the foregoing, in the measuring cap according to the present invention, the inlet is provided in the side of the body in order to increase the discharge efficiency whereby the height of the neck of the container is decreased to thereby enhance the discharge efficiency by approximately 20% as compared with the conventional system.

The inlet a of the body 1 must have a size enough to fill the provisional chamber c with the content till a predetermined quantity of content has been discharged. However, if the size of the inlet is excessively large, the content is returned from the inlet a into the container when the container is operated to be returned to its original vertical position. In view of this, in the measuring cap according to the present invention, the upper and lower widths of the inlet a are decreased, and the lateral width reaching the half-circumference of the body. In this way, if the upper and lower widths of the inlet a are excessively large, the returning quantity excessively increases, and the provisional chamber c is filled with the content within a predetermined time (time till completion of discharge) by the aid of the lateral width. The upper and lower widths of the inlet a depends on the nature of content and the quantity of discharge, and in the present embodiment, the optimum width is 6 mm in the case of the granules of bulk specific gravity 0.76, and the discharge quantity 10 g, and the lateral width should not be limited to a length which reaches the half-circumference of the body.

The content coming from the inlet a does not flow into the main measuring chamber d by the interruption of the vertical plate 9 and the inclined plate 10, and is not directly discharged through the outlet b.

Therefore, the lower end of the inclined plate 10 is provided at a position wherein when the container is inclined by 30 degrees or more from a horizontal level, the content naturally coming from the inlet a may be captured. Preferably, the volume of the provisional chamber c is preset so that a loss portion from the inlet a when the container is returned to its original vertical state may be made 20 to 30 percent greater than the discharge quantity in view of the stability of the discharge, which will be described hereinafter.

Next, when the container C is returned to its original vertical state as shown in FIG. 1, the content within the provisional section c enters the main measuring chamber d. The main measuring chamber d indicates the lower portion from the lower end of the inclined plate 10. Where the content is the powder, the content is not filled horizontally in the lower side of the inclined plate 10, and in the state wherein the surface is inclined, it reaches the bottom wall 4 on the side of the outlet b from the lower end of the inclined plate. That is, where the horizontal distance from the lower end of the inclined plate 10 to the bottom wall 4 on the side of the outlet b is long ,the inclined surface of the surface of the content lower than the inclined plate 10 becomes lengthy and as a result said inclined surface gets out of shape due to the great oscillation and vibrations during the operation of the container. Therefore, a surplus quantity of the content enters into the main measruing chamber d is not constant. Accordingly, in the quantative cap according to the present invention, it is devised so that in order to position the bottom wall 4 close to the inclined plate 10, a depression portion 11 is provided at that place as shown in FIGS. 1 and 3, so as to shorten the inclined surface of the surface of the content.

The main measuring chamber d has a volume in expectation of a short portion of the content due to the presence of the inclined surface in addition to a predetermined quantity of discharge as required, and is designed to be smaller than the volume of the content stayed in the provisional chamber c. More specifically, the provisional section c and the main measuring chamber d are designed so that the content in the provisional chamber c is falled into and filled in the main measuring chamber d and the surface of the content is positioned above the lower end of the inclined plate 10. With this arrangement, when the container c is inclined as shown in FIG. 4 during the subsequent discharge, the content in the main measuring chamber d is moved to the outlet b, the surplus content being positioned above the lower end of the inclined plate 10 is moved into the inner part of the provisional chamber $c$, and the inclined plate 10 is divided into the main measuring portion and a surplus portion. Accordingly, even if the content is secured in a quantity larger than the discharge quantity within the provisional chamber $c$, the quantity of the content actually discharged never exceeds the volume of the main measuring chamber $d$, thus obtaining the stabilized discharge quantity.

EMBODIMENT 2

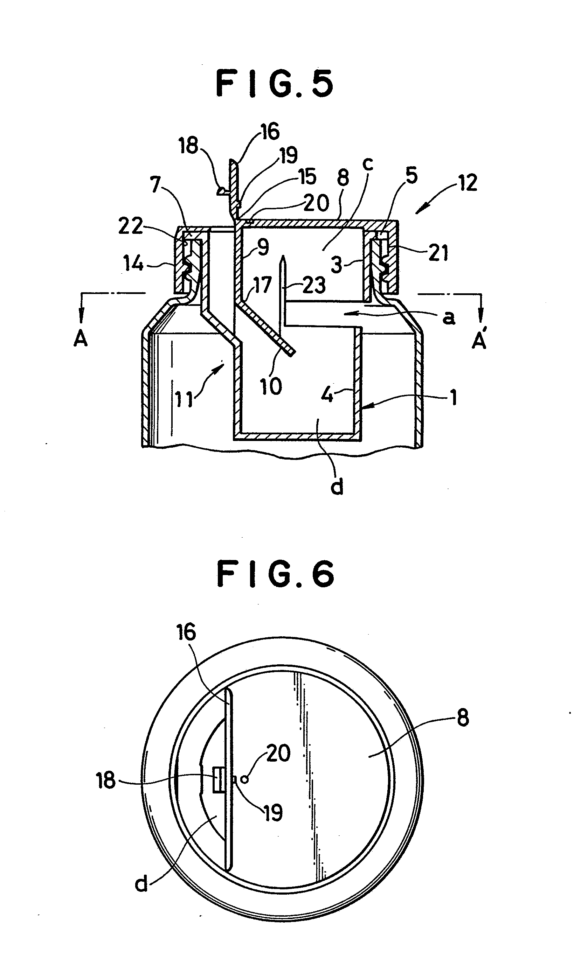

The measuring cap shown in FIG. 5 comprises a body 1, and a cap portion 12 used in place of the partitioning portion 2.

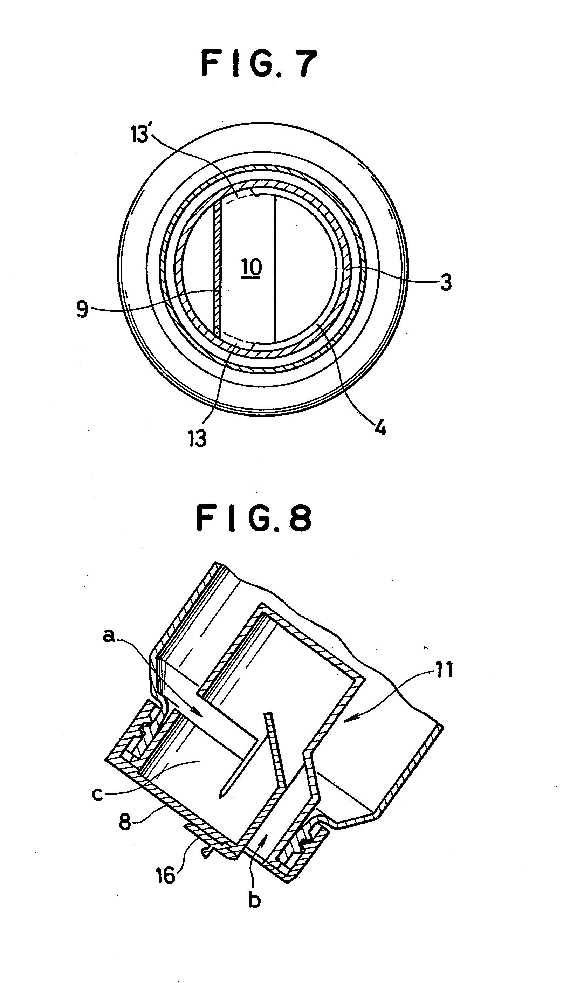

The body 1, which is formed from a cup-shaped integral molded article, comprises a circumferential wall 3 and a bottom wall 4. A semi-circumferential inlet $a$ is provided in a boundary between the circumferential wall 3 and the bottom wall 4. An inwardly positioned depression portion 11 is provided in the bottom wall 4 opposite the inlet $a$, guide stepped portions 13, 13' as shown in FIG. 7 are provided on right and left sides, and a position-adjusting rib 23 is provided internally of the circumferential wall 3 upwardly from both ends of the inelt $a$.

To the upper end of the circumferential wall 3 is connected a flange 7, part of which is formed with a notch 5.

In order to integrally mold the inlet $\underline{a}$, the inside diameter of the circumferential wall 3 is made to be the same as the outside diameter of the bottom wall 4 in the boundary portion, the inlet being molded by cutting of an injection molding mold.

The cap portion 12 is provided with a side wall 14 with a top wall 8 having internal threads. the top wall 8 being partly formed with a circular outlet $\underline{b}$, and a cover portion 16 is provided on the top side through an upper hinge 15 from a portion corresponding to a chord of said circular portion. Further, a vertical plate 9 is provided on the lower side, and an inclined plate 10 is provided at the end thereof through a hinge 17, the vertical plate 9 and inclined plate 10 being molded in a position substantially vertical to the top wall 8.

The internal threads of the side wall 14 are adjusted to those of the container but cannot be subjected to circular milling of a release in injection molding, and therefore, forcible drawing is employed for molding. Accordingly, this can be in the form of a cap-hammer instead of threads.

The cover portion 16 is further provided with a projection 18 to be fitted when the cover is put, a raised portion 19 to open and lock the cover, and a recess portion 20 to engage the raised portion 19.

The measuring cap according to the present invention comprises a combination of the body 1 and the cap portion 12. The body 1 is adjusted horizontally with respect to the cap portion 12 so that the inlet $\underline{a}$ may be positioned oppositely of the outlet $\underline{b}$. First, when the end of the inclined plate 10 of the cap portion 12 impinges upon the guide stepped portions 13, 13' of the body 1 and is further pushed in, it is bended from the lower hing 17 between the inclined plate 10 and the vertical plate 9 and the inclined plate 10 is moved along the guide stepped portions 13, 13'. When the flange 7 of the body 1 has reached the top wall 8 of the cap portion 12, the vertical plate 9 of the cap portion 12 and the inclined plate 10 are set in the state as shown in FIG. 5, and the notch 5 of the body 1 is fitted to the stop rib 21 of the cap portion 12 to effect positioning between the body 1 and the cap portion 12. For the convenience's sake during capping, it is preferable that a circumferential rib 22 is provided to fit the outer circumference of the flange 7 of the body 1 into the upper portion internally of the side wall 14 of the cap portion 12.

In the present invention set as described above, the inlet a is positioned below the provisional chamber c surrounded by the circumferential wall 3, the top wall 8, the vertical plate 9 and the inclined plate 10, the rest portion of the circumferential wall 3 serves as the outlet b, and a portion from the lower end of the inclined plate 10 to be bottom wall 4 serves as the main measring chamber d.

The operation of the measuring cap as described above is very simple. The cap need not be removed from the container body as encountered in conventional containers. The cover portion 16 connected to the cap portion 12 may be opened, and the raised portion 19 provided to serve as a stopper may be fitted into the recess portion 20. The operation similar to that of EMBODIMENT 1 may be then carried out.

As described above, the cap according to the present invention comprises two members. The inlet a is provided in the side, and the cup-like body portion 1 is merely fitted to the partitioning portion 2 or the cap portion 12 to thereby divide into the provisional section c, the main measuring section d and the outlet b, making it possible to provide for a function of quantitative discharge. The cap of the present invention is simple in construction and easy in manufacture. Furthermire, since the inlet a is provided inthe side of the body thereby making it possible to enhance the efficiency of the discharge quantity. Moreover, there is provided an extremely practical excellent measuring cap which can continuously discharge a predetermined quantity of contents by a simple operation, i.e. by merely inclinding the container.

- 15 -   0194407

6.  WHAT IS CLAIMED IS:

(1)      A measuring cap to be mounted on an opening of a container, the cap comprising a cup-like body having an inlet on the side wall thereof, and a partition consisting of a top wall, a vertical plate and an inclined plate, said partition being fitted to the inside of said body to thereby define the interior of said body into a provisional measuring section, a main measuring section, and an outlet passage, the provisional section being communicated with said inlet.

(2)      A measuring cap according to Claim 1, wherein a depression portion is provided on the side of the outlet of said main measuring section.

(3)      A measuring cap according to Claim 1, wherein said partition is provided with a side wall and a cover portion for covering the outlet.

# F I G. 1

# F I G. 2

# FIG. 3

# FIG. 4

FIG.5

FIG.6

# FIG. 7

# FIG. 8